# EUROPEAN PATENT SPECIFICATION

(11) **EP 1 172 964 B1**
(45) Date of publication and mention of the grant of the patent: **22.02.2006**
(21) Application number: 01304848.3
(22) Date of filing: 01.06.2001
(51) Int. Cl.: H04L 9/06

(54) **Extended key preparing apparatus, extended key preparing method, recording medium and computer program**
Verfahren und Vorrichtung zur Vorbereitung eines erweiterten Schlüssels, Aufzeichnungsmedium und Computerprogramm
Dispositif et procédé de préparation d'une clé étendue, support d'enregistrement et logiciel d'ordinateur

(30) Priority: 13.07.2000 JP 2000212482
(43) Date of publication of application: 16.01.2002
(73) Proprietor: FUJITSU LIMITED, Kawasaki-shi, Kanagawa 211-8588 (JP)
(72) Inventor: Shimoyama, Takeshi, Nakahara-ku, Kawasaki, Kanagawa 211-8588 (JP); Ito, Koichi, Nakahara-ku, Kawasaki, Kanagawa 211-8588 (JP)
(74) Representative: Stebbing, Timothy Charles

(56) References cited:
- EP-A- 1 001 398
- US-A- 5 511 123
- A. MENEZES, P. VAN OORSCHOT AND S. VANSTONE: "Handbook of applied cryptography", "Chapter 7, pages 223-282" 1997 , CRC PRESS XP002209334 ISBN: 0849385237 * page 263 - page 266; figure 7.11 *
- N. FERGUSON , B.SCHNEIER: "Cryptanalysis of Akelarre" CRYPTANALYSIS OF AKELARRE, 23 July 1997 (1997-07-23), pages 1-12, XP002209333 ISBN: 084935237 Retrieved from the Internet: <URL:http://citeseer.nj.nec.com/cs> [retrieved on 2002-08-01]
- DAEMEN J.; RIJMEN V.: 'AES Proposal: RINJDAEL' AES PROPOSAL 03 September 1999, pages 1 - 45, XP001060386

## Description

The present invention relates to an extended key preparing apparatus and method as well as to a recording medium and computer program, and particularly to an extended key preparing apparatus for preparing an extended key safely and at high speed, for use in a case where a common key cryptosystem is applied; a process for preparing such an extended key; and a recording medium and computer program used therefor.

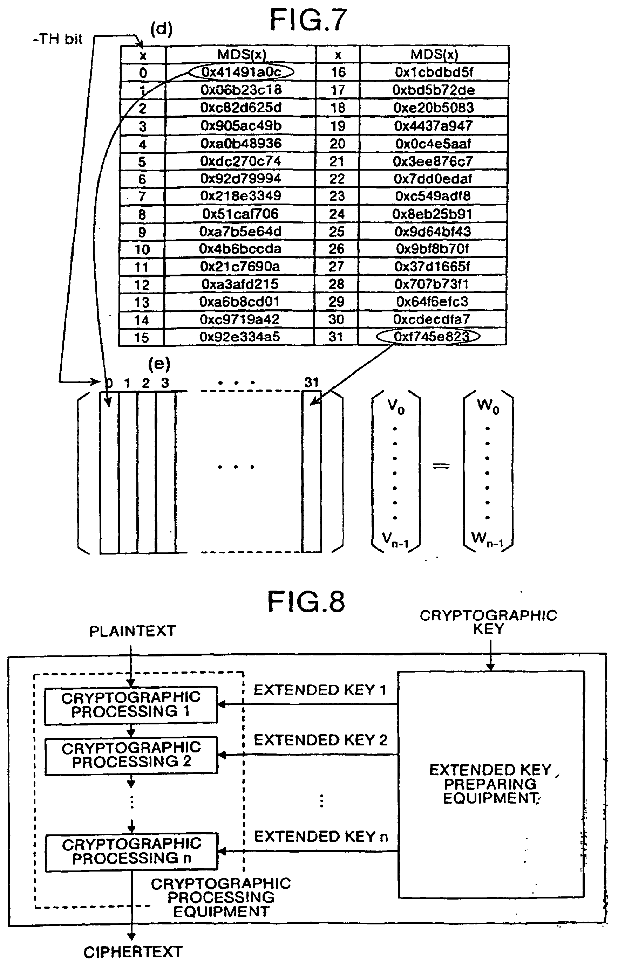

A common key cryptosystem is known wherein a cryptographic key is commonly used in both transmission and reception sides. Fig. 8 is an explanatory view for explaining cryptographic processing in accordance with such a system. As shown in Fig. 8, the cryptographic equipment is composed of an extended key preparing means for preparing an extended key as a cryptographic key, and a cryptographic processing means for encrypting a plaintext by the use of such extended key.

More specifically, since n-stages of cryptographic processing, i.e., cryptographic processing 1 to cryptographic processing n are implemented in the cryptographic processing equipment, extended key 1 to extended key n necessary for the n-stages of cryptographic processing are successively prepared in the extended key preparing means.

Accordingly, it is very important how rapidly a safe extended key is prepared by the extended key preparing means in a case of adopting a common key cryptosystem.

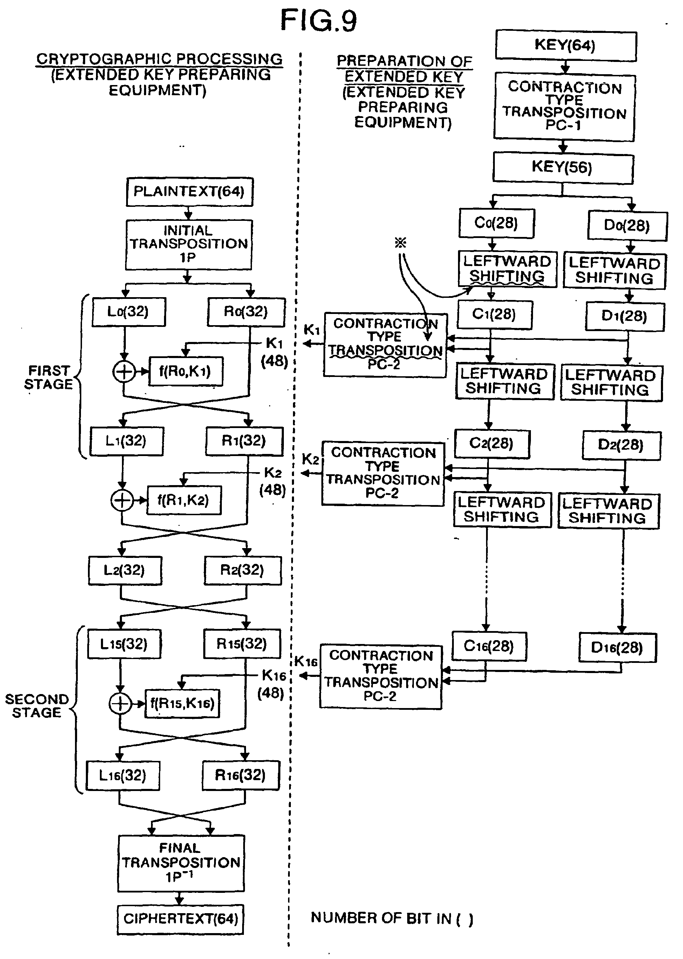

In this connection, according to a DES (Data Encryption Standard) cryptograph, extended keys 1 to n are prepared from a cryptographic key by means of only cyclical shifting and bit transposition, whereby a preparation of extended keys is realized at a high speed as shown in Fig. 9.

Furthermore, a process for preparing extended keys by means of MARS has been known as a process for preparing safer extended keys ("A candidate cipher for AES", The First AES Conference, 1998, pages 1 - 9).

According to the above described DES cryptograph, however, an extended key is prepared by only cyclical shifting and bit transposition as shown by a mark 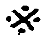 in Fig. 9, so that there are problems in view of safety. More specifically, even if information has been leaked as to one key among the number n of extended keys prepared by extended key preparing equipment, a cryptographic key itself to be input to extended key preparing equipment becomes clear in this DES cryptosystem, whereby problems of safety arise.

On the other hand, according to the above-described MARS extended key preparing apparatus, cryptographic key information cannot be easily acquired from extended key information, so there is no problem as to safety like in the DES cryptosystem. However, in the process of preparing an extended key many calculations must be repeated, thus a lengthy processing time is required.

Thus, there is a problem of how to decrease the processing time in the process of preparing a safe extended key required for applying a common key cryptosystem.

EP-A-1001398 discloses a ciphering apparatus that is provided with a key-dependent linear transformation part which linearly transforms input data of the nonlinear function based on key data stored in a key storage part; a splitting part which splits the output data of the key-dependent linear transformation part to a plurality of bit strings; first nonlinear transformation parts which nonlinearly transform these split bit strings, respectively; a first linear transformation part which linearly transforms the respective output bit strings of the first nonlinear transformation parts in association with each other; second nonlinear transformation parts which nonlinearly transform some or all of the output bit strings of the first linear transformation part; and a combining part which combines the output bit strings of the second nonlinear transformation parts into output data of the nonlinear function part. In other words, the ciphering apparatus linearly transforms input data, splits the data linearly transformed into a plurality of bit strings, nonlinearly transforms each bit string, linearly transforms the bit string nonlinearly transformed, further nonlinearly transforms the bit string linearly transformed, and combines the result. Here, an object to be nonlinearly and linearly transformed is input data corresponding to a plaintext.

XP001060386: AES PROPOSAL: RIJNDAEL from DAEMEN J; RIJMEN V pages 1-45 published 03.09.1999 discloses a scheme for preparing extended keys in which a bit string of a cipher key is divided into bit groups, each bit group is operated on using different constants, intermediate data groups are prepared, one item of intermediate data is selected based on the number of a current stage, and the extended key is obtained by irreversible conversion of the intermediate data. However, according to this scheme the time required to prepare each extended key is dependent on the time needed to prepare the extended keys of preceding stages. Thus, the speed of obtaining the extended keys is limited.

It is a consideration of the present invention to provide an extended key preparing apparatus for preparing an extended key safely and at high speed, for use in a case where a common key cryptosystem is applied; a method for preparing such an extended key; and a recording medium and a program used therefor.

According to a first aspect of the present invention there is provided an extended key preparing apparatus wherein extended keys are prepared in a common key cryptosystem in successive stages from a cryptographic key input, comprising:
a dividing unit which divides a bit string of said cryptographic key into a plurality of bit groups, each bit group having a predetermined bit length;
an intermediate data preparing unit which prepares a plurality of intermediate data groups from the bit groups by a predetermined operation applying different constants in accordance with the value of an integer for each bit group, wherein each of said intermediate data groups is composed of a combination of a plurality of first intermediate data each having three different values;
a selecting unit which selects in each stage one of said three different values of each of the first intermediate data depending on a number of the current stage to determine second intermediate data; and
an extended key preparing unit which prepares in each stage the extended key having a bit length longer than the bit string of said cryptographic key by converting irreversibly the second intermediate data.

According to the invention of the first aspect, the binary digit string of the cryptographic key is divided into a plurality of elements or groups each composed of a predetermined bit length, and a plurality of intermediate data are prepared by applying the plurality of times an operation wherein a predetermined constant is used on the respective elements. Then, for each stage, a plurality of intermediate data corresponding to the number of the current stage reached in preparation of the extended keys are selected from the plurality of the intermediate data prepared; and the extended key for that stage is prepared by converting irreversibly the plurality of the intermediate data selected, whereby such extended keys required in the case where common key cryptosystem is applied can be safely prepared at a high speed.

According to a second aspect of the present invention there is provided an extended key preparing method wherein extended keys are prepared in a common key cryptosystem in successive stages from a cryptographic key, comprising the steps of:
dividing a bit string of said cryptographic key into a plurality of bit groups, each bit group having a predetermined bit length; and
preparing a plurality of intermediate data groups from the bit groups by a predetermined operation applying different constants in accordance with the value of an integer for each bit group, wherein each of said intermediate data groups is composed of a combination of a plurality of first intermediate data each having three different values; and, in each stage:
   selecting one of said three different values of each of the first intermediate data depending on a number of the current stage to determine second intermediate data; and
   preparing the extended key having a bit length longer than the bit string of said cryptographic key by converting irreversibly the second intermediate data.

According to the second aspect, a binary digit (bit) string of the cryptographic key is divided into a plurality of elements or groups each composed of a predetermined bit length, and a plurality of intermediate data are prepared by applying a predetermined constant to the respective elements a plurality of times. Then, in each successive stage of preparing extended keys, a plurality of intermediate data corresponding to the number of the stage reached (current stage) are selected from the plurality of the intermediate data prepared; and the extended key of that stage is prepared by converting irreversibly the plurality of the intermediate data selected, whereby such extended keys required in the case where a common key cryptosystem is applied can be safely prepared at a high speed.

According to a third aspect of the present invention there is provided a computer readable recording medium wherein an extended key preparing program, in which extended keys are prepared in a common key cryptosystem in successive stages from a cryptographic key input, is recorded, the program comprising program code means which when executed perform:
dividing a bit string of said cryptographic key into a plurality of bit groups, each bit group having a predetermined bit length; and
preparing a plurality of intermediate data groups from the bit groups by a predetermined operation applying different constants in accordance with the value of an integer for each bit group, wherein each of said intermediate data groups is composed of a combination of a plurality of first intermediate data each having three different values; and, in each stage:
   selecting one of said three different values of each of the first intermediate data depending on the number of the current stage to determine second intermediate data; and
   preparing the extended key having a bit length longer than the bit string of said cryptographic key by converting irreversibly the second intermediate data.

According to the invention of the third aspect, a binary digit string of the cryptographic key is divided into a plurality of elements (groups) each composed of a predetermined bit length and a plurality of intermediate data are prepared by applying an operation a plurality of times wherein a predetermined constant is used on the respective elements. In each stage, a plurality of intermediate data corresponding to the current stage number are selected from the plurality of the intermediate data prepared; and the extended key of the current stage is prepared by converting irreversibly the predetermined bit length; a plurality of intermediate data are prepared by applying an operation a plurality of times wherein a predetermined constant is used on the respective elements; a plurality of intermediate data corresponding to a number of stages of extended keys are selected from the plurality of the intermediate data prepared; and the extended keys corresponding to the number of stages are prepared by converting irreversibly the plurality of the intermediate data selected, whereby such extended keys required in a case where the common key cryptosystem is applied can be safely prepared at a high speed.

Another aspect of the invention is a program as defined in independent claim 18.

A detailed description of a preferred embodiment of the present invention will now be given, by way of example, with reference to the accompanying drawings, in which:
Fig. 1 is a block diagram showing the whole construction of cryptographic equipment used in an embodiment of the invention;
Fig. 2 is a flowchart illustrating processing steps for preparing an extended key from a cryptographic key by means of extended key processing equipment shown in Fig. 1;
Fig. 3 is an explanatory diagram for explaining a concept for preparing intermediate data by means of intermediate data preparing equipment shown in Fig. 1;
Figs. 4(a) and 4(b) are explanatory diagrams each for explaining a concept for preparing an extended key from the intermediate data by means of an extended key preparing apparatus shown in Fig. 1;
Figs. 5(a), 5(b), and 5(c) are explanatory diagrams each for explaining selection of data by means of selected value deciding equipment as well as rearrangement of data by means of data rearrangement processing equipment shown in Figs. 4(a) and 4(b);
Figs. 6(a), 6(b), and 6(c) are explanatory diagrams (No. 1) each for explaining an example of operations for a nonlinear type function conducted by the intermediate data preparing equipment shown in Fig. 1;
Figs. 7(d) and 7(e) are explanatory diagrams (No. 2) each for explaining another example of operations for the nonlinear type function conducted by the intermediate data preparing equipment shown in Fig. 1;
Fig. 8 is an explanatory diagram for explaining cryptographic processing by means of a usual common key cryptography; and
Fig. 9 is a block diagram illustrating a conventional algorithm based on DES cryptography.

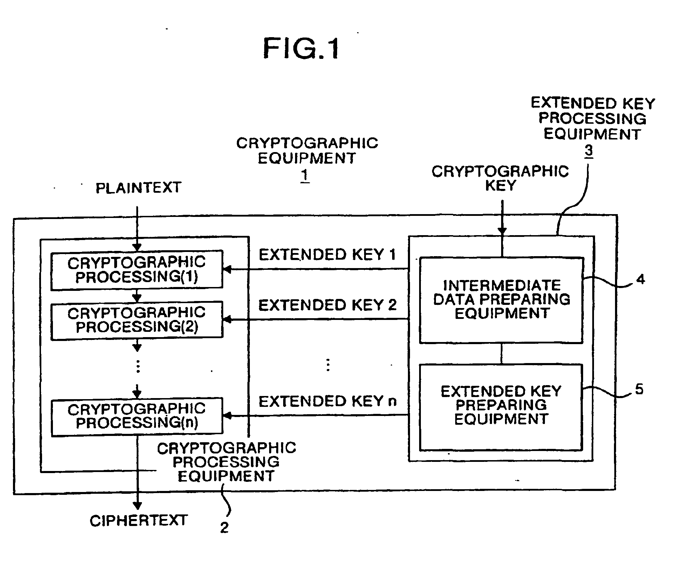

First, the whole construction of cryptographic equipment used in the present embodiment will be described. Fig. 1 is a block diagram illustrating the whole construction of the cryptographic equipment 1 used in the present embodiment. As shown in Fig. 1, the cryptographic equipment 1 is of the type which prepares n extended keys 1 to n from a single cryptographic key in the case when a plaintext or the cryptographic key is input, and encrypts the plaintext by the use of the n extended keys.

The cryptographic equipment 1 involves cryptographic processing equipment 2 for effecting cryptographic processing of a plaintext, and extended key processing equipment 3 for preparing extended keys 1 to n required for encryption in the cryptographic processing equipment 2.

The cryptographic processing equipment 2 performs cryptographic processing (1) to (n) of n-stages by the use of the extended keys 1 to n to prepare a ciphertext corresponding to the plaintext, and the resulting ciphertext is output. In the cryptographic processing of n-stages (1) to (n), each cryptographic processing is carried out after receiving the extended keys 1 to n prepared in the extended key processing equipment 3, and the ciphertext is output from the final stage wherein the cryptographic processing (n) is carried out.

The extended key processing equipment 3 prepares the extended keys 1 to n, which are to be supplied to the cryptographic processing equipment 2 from a cryptographic key which has been input, and which is provided with intermediate data preparing equipment 4 and an extended key preparing equipment 5. It is to be noted that the present embodiment of the invention is characterized in that an extended key is prepared by first preparing intermediate data using the intermediate data preparing equipment 4, and then preparing the extended keys using the intermediate data, unlike the conventional technique wherein an extended key is prepared simply from a cryptographic key.

The intermediate data preparing equipment 4 is a processing section for preparing intermediate data composed of respective elements of aᵢ, bᵢ, cᵢ, and dᵢ (i = 0, 1, and 2) at the time when a cryptographic key is input. In the present embodiment, for convenience, a case where intermediate data a₀ to a₂, b₀ to b₂, c₀ to c₂, and d₀ to d₂ are prepared in a case where "i = 0, 1, and 2" will be described. While a more detailed explanation will be given later, intermediate data are prepared by means of a nonlinear type function, exclusive OR, addition, and multiplication in the intermediate data preparing equipment 4.

The extended key preparing equipment 5 is a processing section for preparing extended keys of a number corresponding to the specified number r of stages from the intermediate data which have been prepared by the intermediate data preparing equipment 4. More specifically, one of each of the elements (for example, a₁, b₀, c₁, and d₂) is selected from the respective elements a₀ to a₂, b₀ to b₂, c₀ to c₂, and d₀ to d₂, the respective elements thus selected are rearranged (for example, in the order of b₀, a₁, d₂, and c₁), and a predetermined calculation is made on the rearranged elements to prepare the extended keys 1 to n.

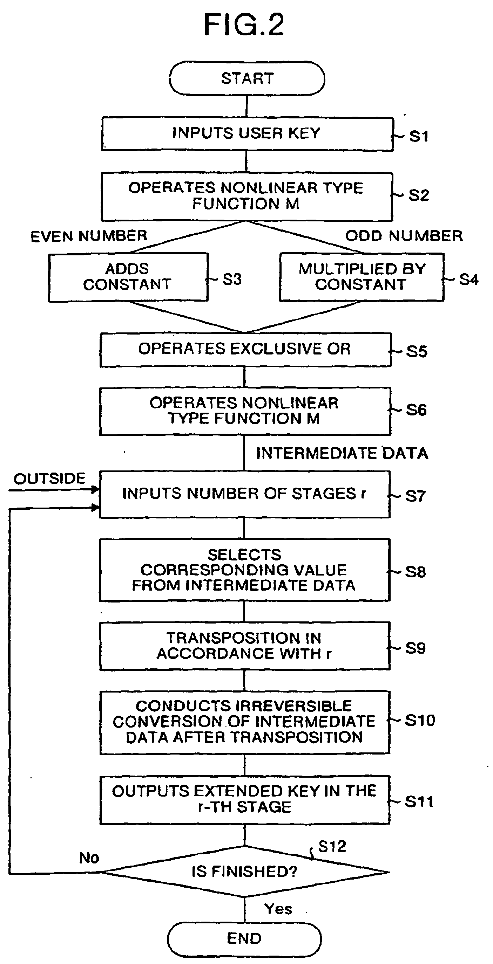

Next, processing steps for preparing extended keys from a cryptographic key by means of the extended key processing equipment 3 shown in Fig. 1 will be described hereinafter. In this connection, Fig. 2 is a flowchart showing processing steps for preparing extended keys from a cryptographic key by using the extended key processing equipment 3 shown in Fig. 1.

As shown in Fig. 2, when plaintext is input together with a cryptographic key (user key) by a user (step S1), the cryptographic key is incorporated (input) into the intermediate preparing equipment 4.

Thereafter, the intermediate processing equipment 4 divides binary digit strings of the cryptographic key into data k₀ to k₇ of eight groups, and an operation wherein a nonlinear type function M is applied, is performed on the data k₀ to k₇ to acquire data k₀' to k₇' (step S2).

Then, a constant is added to each of the even numbered data k₀', k₂', k₄', and k₆' (step S3), while each of the odd numbered data k₁', k₃', k₅', and k₇' are multiplied by the constant (step S4), thereafter an exclusive OR operation is implemented with respect to the results of steps S3 and S4 (step S5), and then, the nonlinear type function M is applied to the results of the steps (step S6), whereby intermediate data aᵢ to dᵢ are prepared. In this example, since i takes values of 0, 1, and 2, intermediate data a₀ to a₂, b₀ to b₂, c₀ to c₂, and d₀ to d₂, are obtained.

Thereafter, when the number r of stages of extended keys is input (step S7), corresponding data are selected from the intermediate data which have been already prepared (step S8), whereby the selected data are transposed in accordance with the number r (step S9). Then, an irreversible conversion G is applied to the intermediate data after the transposition (step S10) to output an extended key of the r-th stage (step S11).

In a case when another extended key is required to be prepared (step S12; YES), the process returns to the above described step S7, and the same processing is repeated, while the preparing process of the extended key is completed in the case when a preparation of the required extended keys has finished (step S12; NO).

As described above, when the processing in the above steps S1 to S6 is carried out, the intermediate data of aᵢ to dᵢ wherein i = 0, 1, and 2 can be prepared. Furthermore, when the processing in the steps S7 to S12 is implemented, extended keys to which irreversible conversion has been applied, can be prepared at a high speed by the use of the intermediate data prepared in the steps S1 to S6.

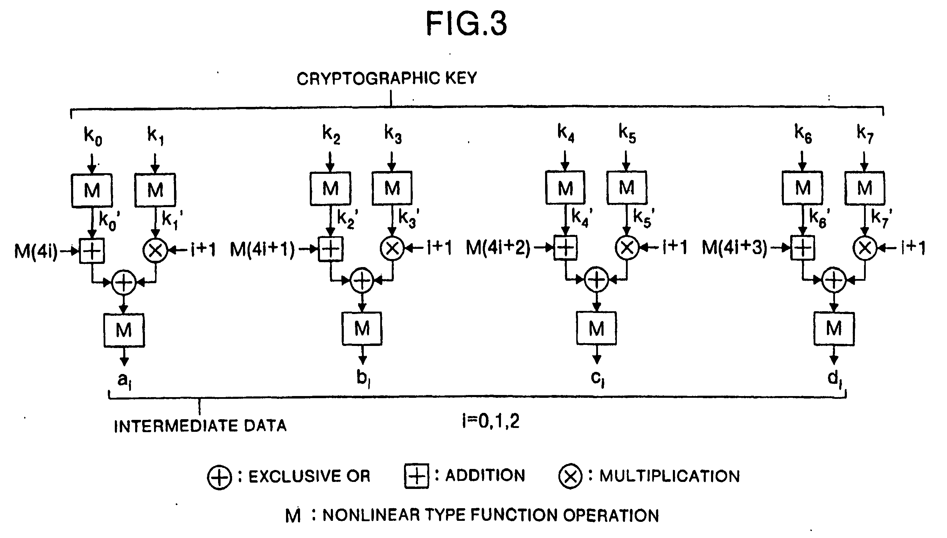

Next, a concept of preparing intermediate data by means of the intermediate data preparing equipment 4 shown in Fig. 1 will be described in more detail. In this connection, Fig. 3 is an explanatory diagram for explaining the concept of preparing intermediate data by means of the intermediate data preparing equipment 4 shown in Fig. 1. In Fig. 3, symbols "k₀ to k₇" designate binary digit strings which are obtained by dividing bit strings of a cryptographic key into eight groups, respectively, "M" is nonlinear type function operation, "+" means addition of a constant, "x" means multiplication of a constant, and symbols "aᵢ to dᵢ" denote intermediate data.

As shown in Fig. 3, the intermediate data preparing equipment 4 divides binary digit strings of the cryptographic key into data k₀ to k₇ of eight groups. For instance, when the cryptographic key is composed of 128 (32 x 4) bits, the initial 32 bits correspond to k₀, the next 32 bits correspond to k₁, the following 32 bits are identified by k₂, and the further following 32 bits are identified as k₃, wherein there are the following relationships, i.e., k₄ = k₀, k₅ = k₁, k₆ = k₂, and k₇ = k₃, respectively. Thus, 32 bits each of data k₀ to k₇ are obtained.

Furthermore, when the cryptographic key is composed of 192 (32 x 6) bits, k₀ to k₅ are prepared, wherein relationships k₆ = k₀, and k₇ = k₁ are established. Still further, when the cryptographic key is composed of 256 (32 x 8) bits, the cryptographic key is divided into 32 bits each to obtain 32 bits each of data k₀ to k₇. According to the manner described above, a cryptographic key may be divided into 32 bits each of data k₀ to k₇, even if the cryptographic key has a length of 128 bits, 192 bits or 256 bits.

Thus, as shown in Fig. 3, a nonlinear type function M is applied to the respective data of k₀ to k₇ to obtain 32 bit data of k₀' to k₇' corresponding respectively to the data k₀ to k₇. Then, a constant is added to even numbered data k₀', k₂', k₄', and k₆', respectively, while odd numbered data k₁', k₃', k₅' and k₇' are multiplied by the constant, respectively.

Thereafter, the bit string of even numbered data to which was added a constant (e.g., k₀' + M(4i)), and the odd numbered bit string which was multiplied by the constant (e.g., k₁' x (i + 1)), are passed through an exclusive OR operation, and further the nonlinear type function M is applied to the result to prepare the intermediate data aᵢ to dᵢ.

It is to be noted herein that constants used in the above-described steps S4 to S6 are M(4i) and (i+1) as shown in Fig. 3 wherein i takes a value of 0, 1, or 2, whereby intermediate data a₀ to a₂, b₀ to b₂ c₀ to c₂, and d₀ to d₂ are obtained.

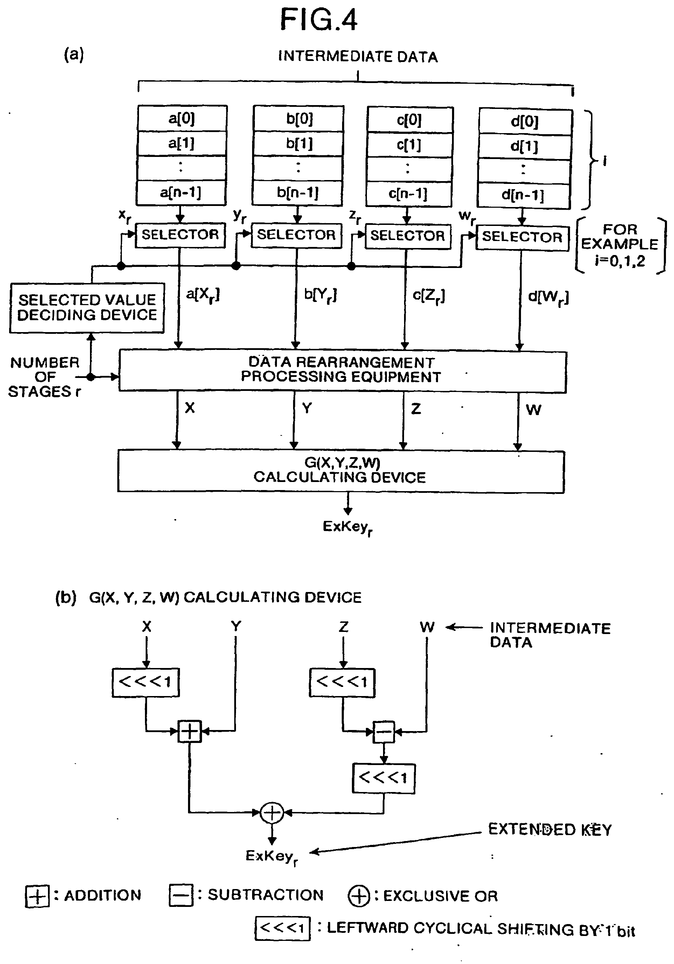

Next, a concept for preparing an extended key from intermediate data by means of the extended key preparing equipment 5 shown in Fig. 1 will be described in more detail. In this connection, Figs. 4(a) and 4(b) are explanatory diagrams each for explaining a concept for preparing an extended key from intermediate data by the use of the extended key preparing equipment 5 shown in Fig. 1.

As shown in Fig. 4(a), the extended key preparing equipment 5 is provided with a selector value deciding device, selectors, a data rearrangement processing device, and a G (X, Y, Z, W) calculating device (irreversible converting unit). The selected value deciding device is used for deciding xr, yr, zr, and wr indicating respective elements a, b, c, and d to be selected from among the respective intermediate data aᵢ, bᵢ, cᵢ, and dᵢ (i = 0, 1, or 2) based on the number of stages r of an extended key to be prepared.

A selector selects intermediate data a(Xᵣ), b(Yᵣ), c(Zᵣ), and d(Wᵣ), respectively, in accordance with the xᵣ, yᵣ, zᵣ, and wᵣ decided by the selector value deciding device.

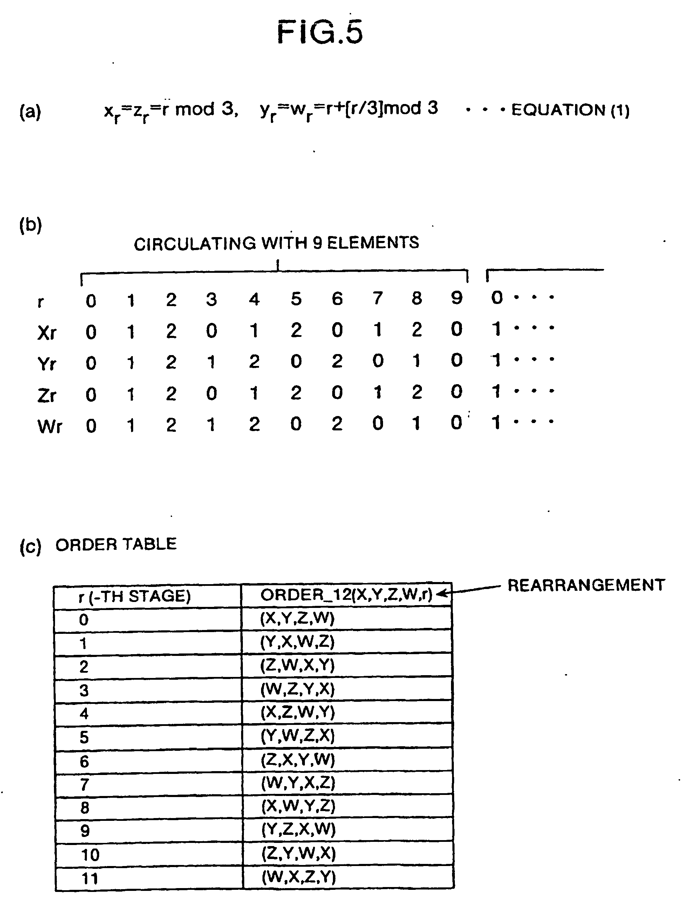

The data rearrangement processing device rearranges (transposes) the data a(Xᵣ), b(Yᵣ), c(Zᵣ), and d(Wᵣ) based on the number of stages r. More specifically, transpositions corresponding to the number of stages r are implemented as shown in Fig. 5(c), which will be described hereinafter.

The G(X, Y, Z, W, and r) calculating device prepares an extended key EₓKeyᵣ based on the data (X, Y, Z, and W) after the rearrangement. The construction of the G(X, Y, Z, W, and r) calculating device is as shown in Fig. 4(b). In the same figure, a representation "<<<1" represents a means for shifting a bit string of data cyclically leftwards by 1 bit, "+" in a square represents a means for the addition of two data (strings), "-" in a square represents a means for subtracting certain data from other data, and "+" in a circle represents a means for an exclusive OR operation.

Procedural steps for preparing an extended key by means of the extended key preparing equipment 5 will now be described. As shown in Fig. 4(a), when the number of stages r is input, the corresponding data are selected from among intermediate data, and the data selected are transposed in accordance with the number r. More specifically, one (string of) data is selected from every element in such a manner that a₁ is selected from among a₀ to a₂, while b₀ is selected from among b₀ to b₂.

For instance, when "a₁, b₀, c₁, and d₂" are selected, they are transposed into "b₀, a₁, d₂, and c₁" wherein X = b₀, Y = a₁, Z = d₂, and W = c₁, respectively, in the case shown in Fig. 4.

Then, irreversible conversion is applied (irreversible conversion G) to the intermediate data after the transposition thereof to output an extended key in the r-th stage. More specifically, the data X is shifted cyclically leftwards by 1 bit and is added to the data Y; and at the same time the data Z is shifted cyclically leftwards by 1 bit, the data W is subtracted therefrom, and the result is cyclically shifted leftwards by 1 bit. Then, the results of the both data are passed through an exclusive OR operation to produce the extended key r in the r-th stage.

Next, selection of data by means of the selected value deciding equipment as well as rearrangement of data by means of the data rearrangement processing equipment shown in Fig. 4(a) will be described in more detail. In this connection, Figs. 5(a), 5(b), and 5(c) are explanatory diagrams each for explaining the selection of data by means of the selected value deciding equipment as well as the rearrangement of data by means of the data rearrangement processing equipment shown in Fig. 4(a).

Fig. 5(a) expresses equations (1), which are applied at the time when intermediate data to be selected is selected by the selected value deciding equipment, and they are as follows: ${x}_{r} = {z}_{r} = r mod 3$ ${y}_{r} = {w}_{r} = r + [ r / 3 ] mod 3$
as expressed in equations (1).

Fig. 5(b) is a diagram illustrating schematically the equations (1) shown in Fig. 5(a) wherein numerical values corresponding to those, which are to be selected from one of three numbers of 0, 1, and 2 are indicated in the case where the number of stages is r, and a group composed of nine numbers are cycled.

When a value corresponding to the number of stages r (one of three numbers i = 0, 1, and 2) is decided in accordance with Fig. 5(a) or Fig. 5(b), the values (Xᵣ, Yᵣ, Zᵣ, and Wᵣ) corresponding to the number of stages r can be selected from the number i each of intermediate data shown in Fig. 4(a).

Fig. 5(c) shows an order table that is used in a case where rearrangement is implemented by means of the data rearrangement processing equipment. This order table functions to decide an order in a case where the intermediate data (Xᵣ, Yᵣ, Zᵣ, and Wᵣ) of the number of stages r selected in Fig. 5(a) or Fig. 5(b) are rearranged (replaced). More specifically, rearrangement is carried out in accordance with the order table wherein the number of stages r on the left side are allowed to correspond to orders for rearrangement on the right side of the figure.

For instance, when "a₁, b₀, c₁, and d₂" are selected, the order becomes "a₁, b₀, c₁, and d₂" in a case where the number of stages is 0, becomes "b₀, a₁, d₂, and c₁" in a case where the number of stages is 1, and further becomes "d₂, c₁, b₀, and a₁" in the case where the number of stages is 2.

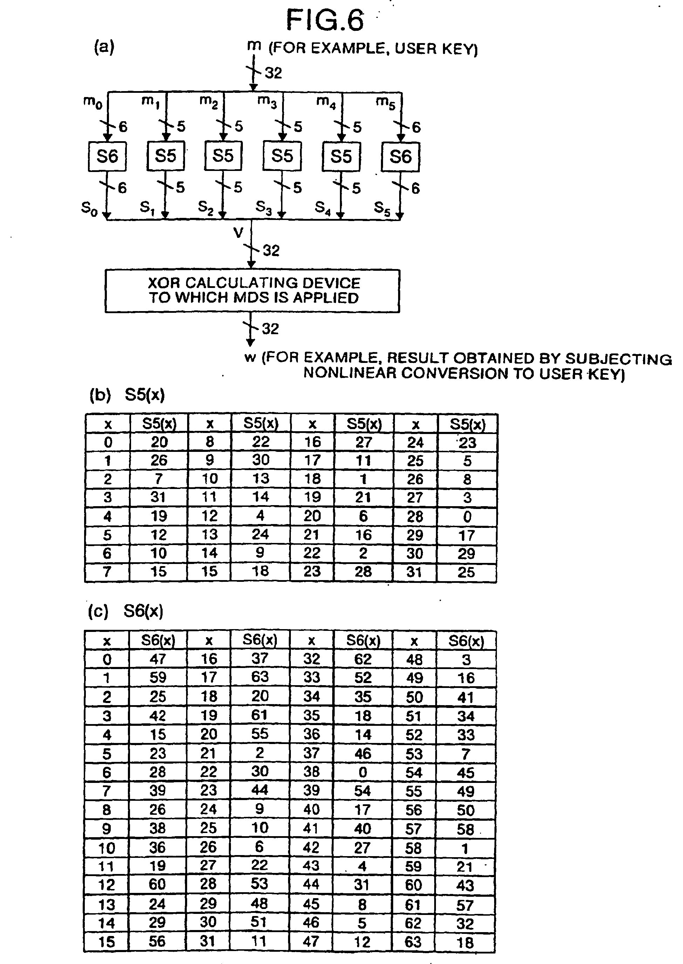

Next, an example of a nonlinear type function operation performed by the intermediate data preparing equipment 4 shown in Fig. 1 will be described. It is to be noted that the present invention is not limited to this nonlinear type operation, but a variety of nonlinear type operations may also be applied. Figs. 6(a), 6(b), and 6(c) as well as Figs. 7(d) and 7(e) are explanatory diagrams each for explaining an example of a nonlinear type function operation carried out by the intermediate data preparing equipment 4 shown in Fig. 1.

Fig. 6(a) illustrates an example of the whole construction of operation for the nonlinear type function M in a case where the nonlinear type function M is operated by applying a user key (cryptographic key) m of 32 bits to prepare a result w of 32 bits.

As illustrated, a user key of 32 bits is divided herein into m₀, m₁, m₂, m₃, m₄, and m₅ of 6, 5, 5, 5, 5, and 6 bits, respectively. Then, values x are converted into those of S5 (x) according to the 5-bit values m₁, m₂, m₃, and m₄, respectively, in accordance with the table of S5 (x) shown in Fig. 6(b).

Likewise, values of x are converted into values of S6 (x) according to the 6-bit values m₀, and m₆, respectively, in accordance with S6 (x) shown in Fig. 6(c), whereby data v shown in Fig. 6(a) is prepared.

Thereafter, values of MDS (x) shown in Fig. 7(d) are placed at respective positions of a determinant shown in Fig. 7(e), at the same time data v are also disposed in another determinant (matrix) shown in Fig. 7(e), and both sets of values are subjected to a matrix computation to calculate values w. Thus, results (operation results of nonlinear type function M) by means of an XOR calculating device, wherein the MDS of Fig. 6(a) is used, are obtained.

Next, processing in the first stage for preparing intermediate data from a cryptographic key which has been already explained, as well as processing in the second stage for preparing extended keys of the number of stages r assigned by the intermediate data, will be described by the use of mathematical models and signs.
(1) Processing in the first stage (processing for preparing intermediate data from a cryptographic key) :
   (1-1) A cryptographic key of 256 bits is divided into eight items of data k₀, k₁, ..., k₇ each of 32 bits (see Fig. 3).
   (1-2) Intermediate data aᵢ, bᵢ, cᵢ, and dᵢ (i = 0, 1, 2) are prepared in accordance with the calculations of the following paragraphs (1-3) to (1-6) by utilizing the nonlinear type function M to which is input the 32-bit data obtained in the paragraph (1-1); M is also applied to the output 32-bit data (see Fig. 3). Furthermore, process steps (3-1) to (3-6) are executed with respect to the nonlinear type function M.
   (1-3) aᵢ = M (Ta (k₀, i) XOR Ua (k₁, i) wherein Ta (k₀, i) = M (k₀) + M (4i), Ua (k₁, i) = M (k₁) x (i+1) is calculated. XOR represents an exclusive OR operation.
   (1-4) bᵢ = M (Tb (k₂, i) XOR Ub (k₃, i) wherein Tb (k₃, i) = M (k₂) + M (4i+1), Ub (k₃, i) = M (k₃) x (i+1) is calculated.
   (1-5) cᵢ = M (Tc (k₄, i) XOR Uc (k₅, i) wherein Tc (k₄, i) = M (k₄) + M (4i+2), Uc (k₅, i) = M (k₅) x (i+1) is calculated.
   (1-6) dᵢ = M (Td (k₆, i) XOR Ud (k₇, 1)) wherein Td (k₆, i) = M (k₆) + M (4i+3), Ud (k₇, i) = M (k₇) x (i+1) is calculated.
(2) Processing in the second stage (processing for preparing extended keys of the number of stages r from intermediate data) :
   (2-1) Calculation is made with respect to extended keys EₓKeyᵣ of the number of stages r (r = 0, 1, and 2) in accordance with the following paragraphs (2-2) to (2-4) (see Fig. 4 (a)).
   (2-2) A progression X, Y, Z, W represented by Xr = Zr = r mod 3, Yr = Wr = r + [r/3] mod 3 (Equation (1)) is used to obtain (X, Y, Z, W) = (a (Xr), b (Yr), c (Zr), d (Wr)).
   (2-3) Data rearrangement represented by (X, Y, Z, W) = ORDER_12(X, Y, Z, W, r') wherein ORDER_12 (X, Y, Z, W, r') is as shown in Fig. 5(c), is made with respect to r' satisfying r' = (r + [r/36]) mod 12.
   (2-4) Extended keys of the number of stages r are calculated by means of EₓKeyᵣ = G (X, Y, Z, W) wherein G (X, Y, Z, W) = ((x <<< 1) + Y) XOR (((Z <<< 1) - W) <<< 1), and <<< 1 indicates 1 bit leftward cyclical shifting (see Fig. 4(b)).
(3) Operation processing of the nonlinear type function M:
   (3-1) In accordance with the following paragraphs (3-2) to (3-6), a result w of 32 bits is output from an input m of 32 bits (see Fig. 6(a)).
   (3-2) The input m is bit-divided to acquire values m₀, ... , m₅ in the following forms:
      m₀ = (the 5th bit from the 0th bit, i.e. bits 0 to 5, of m)
      m₁ = (the 10th bit from the 6th bit of m)
      m₂ = (the 15th bit from the 11th bit of m)
      m₃ = (the 20th bit from the 16th bit of m)
      m₄ = (the 25th bit from the 21st bit of m)
      m₅ = (the 31st bit from the 26th bit of m)
   (3-3) A nonlinear type transformation function S₅ which outputs 5 bits in response to an input of 5 bits as well as a nonlinear type conversion function S₆ which outputs 6 bits in response to an input of 6 bits wherein S₅ and S₆ are those shown in Figs. 6(b) and 6(c), respectively, are used to acquire the following results:
      s₀ = S₆ (m₀)
      s₁ = S₅ (m₁)
      s₂ = S₅ (m₂)
      s₃ = S₅ (m₃)
      s₄ = S₅ (m₄)
      s₅ = S₆ (m₅)
   (3-4) An equation v = s0|s1|s2|s3|s4|s5 wherein "|" represents a link of bit values, is calculated.
   (3-5) An equation w = (v0 x MDS (0)) XOR (v1 x MDS (1)) XOR ... XOR (v 31 x MDS (31)) wherein vi x MDS (i) is 0 in case of vi = 0, while it is MDS (i) in a case of vi = 1, by means of the MDS conversion table from which is output 32 bits from the bit value vi that is the i-th v and the input of 5 bits, and MDS is as shown in Fig. 7(d), is calculated.
   (3-6) The system outputs w.

As mentioned above, the present embodiment is constructed such that intermediate data aᵢ, bᵢ, cᵢ, and dᵢ are prepared by the intermediate data preparing equipment 4 from a cryptographic key through a nonlinear type function operation and the like, the extended key preparing equipment 5 selects a [Xr], b [Yr], c [Zr], and d [Wr] corresponding to the number of stages r from the intermediate data, and rearranges the data as well as implements a bit operation to prepare extended keys. As a result, safe extended keys can be prepared from a cryptographic key at a high speed.

More specifically, the present invention has such a construction that intermediate data are prepared from a cryptographic key in the first stage, and arbitrary data are selected from the intermediate data to effect irreversible conversion in the second stage, whereby extended keys of an arbitrary number are prepared. Thus, it becomes possible to prepare the extended keys at a high speed through irreversible conversion, whereby safety in common key system can be improved.

As a result, the present invention provides the following advantages.
(1) Although a significant period of time is required for preparing one (piece of) intermediate data, the number (amount) of intermediate data required can be reduced by the extended key preparing equipment 5, whereby extended keys each having high safety can be prepared at a high speed.
(2) In a case where only the extended keys which will be required are prepared in the course of processing for encryption or decryption without storing all the prepared extended keys EₓKey₀, EₓKey₁, . . . , EₓKeyₙ₋₁. only the extended keys which correspond to the number of stages r assigned need to be prepared.

Further explanation will be made in this respect. In a common key cryptosystem, in general, when extended keys are used in the order EₓKey₀, EₓKey₁, . . . , EₓKeyₙ₋₁ in encryption, the extended keys are employed in the reverse order in decryption, namely EₓKeyₙ₋₁, ..., EₓKey₁, EₓKey₀ in decryption. In this case, when successive preparation is made in accordance with an extended key preparing apparatus wherein a value of EₓKey₀ is required for preparing EₓKey₁ (see Fig. 9 mentioned already), EₓKey₁ cannot be directly prepared, but EₓKey₀ is first prepared, and then EₓKey₁ is prepared by the use of EₓKey₀. Accordingly, it takes longer to prepare an extended key in decryption than in encryption (by an amount corresponding to the time as explained above).

On the other hand, since extended keys can be prepared by assigning an arbitrary number of stages r independent from the other extended keys in the present embodiment, the same period of time is required in both a case where extended keys are prepared in an order of EₓKey₀, EₓKey₁, ... , EₓKeyₙ₋₁ and a case where extended keys are prepared in an order of EₓKeyₙ₋₁, ... , EₓKey₁, EₓKey₀.

As described above, the present embodiment according to the invention exhibits such a remarkable advantage that even if extended keys are prepared successively, periods of time for processing encryption and decryption can be made equal to each other, whereby a delay in decryption can be avoided.

While only the case where i = 0, 1, and 2 has been described in the present embodiment for the convenience of explanation, the present invention is not limited thereto, but it is also applicable for the case where i is 3 or more. Furthermore, although an example of a nonlinear type function operation has been described herein, the invention is not limited thereto, but other one way functions such as so-called hash functions and the like are applicable.

As described above, according to the invention claimed in the first aspect, a binary digit string of a cryptographic key is divided into a plurality of elements each composed of a predetermined bit length; a plurality of intermediate data are prepared by applying an operation a plurality of times wherein a predetermined constant is used on the respective elements; a plurality of intermediate data corresponding to a number of stages of extended keys are selected from the plurality of the intermediate data prepared; and extended keys corresponding in number to the number of stages are prepared by converting irreversibly the plurality of the intermediate data selected, whereby extended keys required in the case where a common key cryptosystem is applied can be safely prepared at a high speed.

Preferably, a nonlinear type operation is effected with respect to the respective elements divided, whereby bits forming a cryptographic key are diffused, so that safety in cryptography can be improved.

It is further preferred that, when the cryptographic key is divided into eight elements of 32 bits, the nonlinear type operating means separates the elements into 6, 5, 5, 5, 5, and 6 bits to transpose the same into other data, respectively, and the data after transposition are subjected to the nonlinear type operation by the use of a determinant, whereby the nonlinear type operation can be efficiently carried out at a high speed.

It is also preferable that, a constant is added to an odd numbered element which has been subjected to the nonlinear type operation; at the same time an even number-th element which has been subjected to the nonlinear type operation is multiplied by the constant; and an exclusive OR operation of odd- and even-numbered elements is effected, whereby intermediate data can be efficiently prepared.

Preferably, the result of the exclusive OR operation is subjected to the nonlinear type operation to prepare intermediate data, whereby bits forming the result of the exclusive OR operation are further diffused, so that safety in cryptography can be much improved.

Preferably, the plurality of times of additions and multiplications are repeated with the use of a number i of different constants, respectively, to prepare the number i of data in every element; i times of operations for acquiring exclusive OR of the odd- and even-numbered elements which have been operated by the use of the same constants are repeated; and the number i of intermediate data are prepared in every element, whereby a plurality of intermediate data can be prepared in every respective element by a simple procedure.

Preferably, one item of intermediate data corresponding to the number of stages of an extended key is selected among the number i of intermediate data contained in the respective elements prepared, whereby independence of a certain extended key can be maintained with respect to the other keys.

Preferably, a plurality of intermediate data selected are rearranged; and the plurality of intermediate data which have been rearranged are converted irreversibly, whereby a unidirectional property of a certain cryptographic key towards extended keys can be maintained, so that even if a certain extended key leaks out, the cryptographic key can be kept secret.

Preferably, when intermediate data are rearranged in an order of elements X, Y, Z, and W by the rearrangement means, first data is prepared by adding the element Y to data obtained by shifting cyclically the element X leftwards by 1 bit; second data is prepared by shifting cyclically the data leftwards by 1 further bit, which data has been obtained by subtracting the element W from data obtained by shifting cyclically the element Z leftwards by 1 bit; and an exclusive OR of the first data and the second data is operated, whereby irreversible conversion can be efficiently implemented at a high speed.

Preferably, a cryptographic key of 128 bits, 192 bits, or 256 bits is divided into eight elements of 32 bits, whereby the extended key can be prepared by using the same logic, even if the number of bits input differs in the extended key.

According to the invention claimed in the second aspect, a binary digit string of a cryptographic key is divided into a plurality of elements each composed of a predetermined bit length; a plurality of intermediate data are prepared by applying an operation a plurality of times wherein a predetermined constant is used for the respective elements; a plurality of intermediate data corresponding to a number of stages of extended keys are selected from the plurality of the intermediate data prepared; and extended keys corresponding in number to the number of stages are prepared by converting irreversibly the plurality of the intermediate data selected, whereby such extended keys required in the case where a common key cryptosystem is applied can be safely prepared at a high speed.

Preferably, a nonlinear type operation is effected with respect to the respective elements divided, whereby bits forming a cryptographic key are diffused, so that safety in cryptograph can be improved.

Preferably, when the cryptographic key is divided into eight elements of 32 bits, the nonlinear type operating means separates the elements into 6, 5, 5, 5, 5, and 6 bits to transpose the same into other data, respectively, and the data after transposition are subjected to the nonlinear type operation by the use of a determinant, whereby the nonlinear type operation can be efficiently carried out at a high speed.

Preferably, a constant is added to an odd-numbered element which has been subjected to the nonlinear type operation; at the same time as an even-numbered element which has been subjected to the nonlinear type operation is multiplied by the constant; and an exclusive OR operation of both the odd- and the even-numbered elements is effected, whereby intermediate data can be efficiently prepared.

Preferably, the result of the exclusive OR operation is subjected to the nonlinear type operation to prepare intermediate data, whereby bits forming the result of the exclusive OR operation are further diffused, so that safety in cryptography can be improved.

Preferably, the plurality of times of additions and multiplications are repeated with the use of a number i of different constants, respectively, to prepare the number i of data in every element; i times of operations for acquiring exclusive OR of the odd- and even-numbered elements which have been operated by the use of the same constants are repeated; and the number i of intermediate data are prepared in every element, whereby a plurality of intermediate data can be prepared in every respective element by a simple procedure.

Preferably, one element of intermediate data corresponding to the number of stages of an extended key is selected among the number i of intermediate data contained in the respective elements prepared, whereby independence of a certain extended key can be maintained with respect to the other keys.

Preferably, a plurality of intermediate data selected are rearranged; and the plurality of intermediate data which have been rearranged are converted irreversibly, whereby a unidirectional property of a certain cryptographic key towards extended keys can be maintained, so that even if a certain extended key leaks out, the cryptographic key can be held in secret.

Preferably, when intermediate data are rearranged in an order of elements X, Y, Z, and W by the rearrangement means, first data is prepared by adding the element Y to a data obtained by shifting cyclically the element X leftwards by 1 bit; second data is prepared by shifting cyclically the data leftwards by 1 further bit, which data has been obtained by subtracting the element W from data obtained by shifting cyclically the element Z leftwards by 1 bit; and an exclusive OR of the first data and the second data is operated, whereby irreversible conversion can be efficiently implemented at a high speed.

Preferably, a cryptographic key of 128 bits, 192 bits, or 256 bits is divided into eight elements (groups) of 32 bits, whereby the extended key can be prepared by using the same logic, even if the number of bits input differs in the extended key.

According to the invention claimed in the third aspect, a binary digit string of the cryptographic key is divided into a plurality of elements (groups) each composed of a predetermined bit length; a plurality of intermediate data are prepared by applying an operation a plurality of times wherein a predetermined constant is used on the respective elements; a plurality of intermediate data corresponding to a number of stages of extended keys are selected from the plurality of the intermediate data prepared; and extended keys corresponding in number to the number of stages are prepared by converting irreversibly the plurality of the intermediate data selected, whereby such extended keys required in the case where a common key cryptosystem is applied can be safely prepared at a high speed.

## Claims

1. An extended key preparing apparatus (3) wherein extended keys ExKeyᵣ are prepared in a common key cryptosystem in successive stages r:r=1...n from a cryptographic key input, comprising:
a dividing unit (4) adapted to divide a bit string of said cryptographic key into a plurality of bit groups k₀, k₁,..., each bit group having a predetermined bit length;
an intermediate data preparing unit (4) adapted to prepare a plurality of intermediate data groups a, b, ... from the bit groups k₀, k₁, ... by a predetermined operation applying different constants in accordance with the value of an integer i for each bit group k₀, k₁,..., wherein each of said intermediate data groups a, b,... is composed of a combination of a plurality of first intermediate data a[i], b[i],... each having three different values i=0, 1, or 2;
a selecting unit (5) adapted to select in each stage one of said three different values a[i], b[i]... of each of the first intermediate data depending on a number r of the current stage to determine second intermediate data a[Xᵣ], b[Yᵣ],...; and
an extended key preparing unit (5) adapted to prepare in each stage the extended key ExKeyᵣ having a bit length longer than the bit string of said cryptographic key by converting irreversibly the second intermediate data a[Xᵣ], b[Yᵣ],...

2. An extended key preparing apparatus according to claim 1, wherein said intermediate data preparing unit (4) is provided with a nonlinear operating unit adapted to effect a nonlinear operation with respect to each bit group k₀, k₁, ... to prepare the intermediate data groups a, b, ....

3. An extended key preparing apparatus according to claim 2, wherein said dividing unit (4) is adapted to divide the bit string of said cryptographic key into eight of the bit groups k₀, k₁, ... k₇, the predetermined bit length is 32 bits, and said nonlinear operating unit is adapted to separate each bit group into 6, 5, 5, 5, 5, and 6 bits m₀,m₁,m₂,m₃,m₄,m₅, transform the four 5-bits into four first values S₁ - S₄ by using a first nonlinear transformation function, transform the two 6-bits into two second values S₀, S₅ by using a second nonlinear transformation function, link the four first values S₁ - S₄ to the two second values S₀,S₅ to obtain a third value V, and prepare the first intermediate data a[i], b[i], c[i], d[i] by logical operation using each bit of the third value Vi and a fourth value MDS(i) depending on the position i of the bit obtained from a predetermined table.

4. An extended key preparing apparatus according to claim 2 or 3, wherein said intermediate data preparing unit (4) is provided with:
an addition unit adapted to add a first constant to an even-numbered bit group k₀', k₂', ... that has been subjected to the nonlinear operation to obtain a first result Ta (k₀, i), Tb (k₂, i) ... ;
a multiplication unit adapted to multiply by a second constant an odd-numbered bit group k₁', k₃' ... which has been subjected to the nonlinear operation to obtain a second result Ua (k₁, i), Ub (k₃, i) ... , wherein the odd number is the even number plus one; and
an exclusive OR operating unit adapted to effect an exclusive OR operation of the first result and the second result.

5. An extended key preparing apparatus according to claim 4, wherein said intermediate data preparing unit (4) is further provided with a preparing unit for nonlinearly operating on a result of the exclusive OR operation to obtain the intermediate data groups.

6. An extended key preparing apparatus according to any preceding claim, wherein said extended key preparing unit (5) is provided with:
a rearrangement unit adapted to rearrange the second intermediate data a[Xᵣ], b[Yᵣ], ... to obtain rearranged intermediate data; and
an irreversible conversion unit adapted to convert irreversibly the rearranged intermediate data.

7. An extended key preparing apparatus according to claim 6, wherein the second intermediate data a[Xᵣ], b[Yᵣ], c[Zᵣ], d[Wᵣ] includes four items represented by four elements X, Y, Z, and W, respectively, said rearrangement unit rearranges the four items, and said irreversible conversion unit:
is adapted to prepare first data by adding the element Y to data obtained by shifting cyclically the element X leftwards by 1 bit;
is adapted to prepare second data determined by shifting cyclically the data leftwards by 1 further bit, which data has been obtained by subtracting the element W from data obtained by shifting cyclically said element Z leftwards by 1 bit; and
is adapted to perform an exclusive OR operation on said first data and said second data.

8. An extended key preparing apparatus according to any preceding claim, wherein said dividing unit is adapted to divide a cryptographic key of 128 bits, 192 bits, or 256 bits into eight groups k₀, k₁, ... k₇ of 32 bits.

9. An extended key preparing method wherein extended keys ExKeyᵣ are prepared in a common key cryptosystem in successive stages r:r=1,2...n from a cryptographic key, comprising the steps of:
dividing a bit string of said cryptographic key into a plurality of bit groups k₀, k₁, ... k₇, each bit group having a predetermined bit length; and
preparing (S2 - S6) a plurality of intermediate data groups a, b, ... from the bit groups k₀, k₁... by a predetermined operation applying different constants in accordance with the value of an integer i for each bit group k₀, k₁,... wherein each of said intermediate data groups a, b,... is composed of a combination of a plurality of first intermediate data a[i], b[i],...each having three different values i=0, 1, or 2; and, in each stage:
selecting (S8) one of said three different values a[i], b[i], ... of each of the first intermediate data depending on a number r of the current stage to determine second intermediate data a[Xᵣ], b[Yᵣ]...; and
preparing (S9 - S11) the extended key ExKeyᵣ having a bit length longer than the bit string of said cryptographic key by converting irreversibly the second intermediate data a[Xᵣ], b[Yᵣ], ....

10. An extended key preparing method according to claim 9, wherein said preparing step (S2-S6) includes a nonlinear operating step for effecting a nonlinear operation with respect to each bit group k₀, k₁, ... to prepare the intermediate data groups a, b, ....

11. An extended key preparing method according to claim 10, wherein said dividing step divides the bit string of said cryptographic key into eight of the bit groups k₀, k₁, ... k₇, the predetermined bit length is 32 bits and said nonlinear operating step includes:
separating each bit group into 6, 5, 5, 5, 5, and 6 bits m₀, m₁, m₂, m₃, m₄, m₅;
transforming the four 5-bits into four first values S₁-S₄ by using a first nonlinear transformation function;
transforming the two 6-bits into two second values S₀, S₅ by using a second nonlinear transformation function;
linking the four first values S₁-S₄ to the two second values S₀, S₅ to obtain a third value V; and
preparing the first intermediate data a[i], b[i], c[i] or d[i] by logical operation using each bit of the third value Vi and a fourth value MDS(i) depending on the position i of the bit obtained from a predetermined table.

12. An extended key preparing method according to claim 10 or 11, wherein said intermediate data preparing step (S2-S6) includes:
an addition step (S3) for adding a first constant to an even-numbered bit group k₀', k₂', ... that has been subjected to the nonlinear operation to obtain a first result Ta(k₀, i), Tb(k₂, i), ...;
a multiplication step (S4) for multiplying by a second constant i+1 an odd-numbered bit group k₁', k₃', ... which has been subjected to the nonlinear operation to obtain a second result Ua(k₁, i), Ub(k₃, i), ..., wherein the odd number is the even number plus one; and
an exclusive OR operating step (S3) for effecting an exclusive OR operation of the first result and the second result.

13. An extended key preparing method according to claim 12, wherein said intermediate data preparing step further comprises a step for preparing the intermediate data group by nonlinearly operating on a result of the exclusive OR operating step (S5).

14. An extended key preparing method according to any of claims 9-13 wherein said extended key preparing step (S9 - S11) includes:
a rearrangement step (S9) for rearranging the second intermediate data a[Xᵣ], b[Yᵣ], ... to obtain rearranged intermediate data; and
an irreversible conversion step (S10) for converting irreversibly the rearranged intermediate data.

15. An extended key preparing method according to claim 14, wherein the second intermediate data a[Xᵣ], b[Yᵣ], c[Zᵣ], d[Wᵣ] includes four items represented by four elements X, Y, Z, and W, respectively, said rearrangement step (S9) includes rearranging the four items, and said irreversible conversion step (S10) includes:
preparing first data by adding the element Y to data obtained by shifting cyclically the element X leftwards by 1 bit;
preparing second data determined by shifting cyclically the data leftwards by 1 further bit, which data has been obtained by subtracting the element W from data obtained by shifting cyclically said element Z leftwards by 1 bit; and
performing an exclusive OR operation on said first data and said second data.

16. An extended key preparing method according to any of claims 9-15, wherein said dividing step includes dividing a cryptographic key of 128 bits, 192 bits, or 256 bits into eight bit groups k₀, k₁, ... k₇ of 32 bits.

17. A computer readable recording medium wherein an extended key preparing program, in which extended keys ExKeyᵣ are prepared in a common key cryptosystem in successive stages r:r=1,2...n from a cryptographic key input, is recorded, the program comprising program code means which when executed perform:
dividing a bit string of said cryptographic key into a plurality of bit groups k₀, k₁, . . . , each bit group having a predetermined bit length; and
preparing (S2-S6) a plurality of intermediate data groups a, b, ... from the bit groups k₀, k₁, ... by a predetermined operation applying different constants in accordance with the value of an integer i for each bit group k₀, k₁, . . ., wherein each of said intermediate data groups a, b, ... is composed of a combination of a plurality of first intermediate data a[i], b[i], ... each having three different values i=0, 1, or 2; and, in each stage:
selecting (S8) one a[i], b[i], ... of said three different values of each of the first intermediate data depending on the number r of the current stage to determine second intermediate data a[Xᵣ], b[Yᵣ], ...; and
preparing (S9-S11) the extended key ExKeyᵣ having a bit length longer than the bit string of said cryptographic key by converting irreversibly the second intermediate data a[Xᵣ], b[Yᵣ], ...

18. An extended key preparing program in which extended keys ExKeyᵣ are prepared in a common key cryptosystem in successive stages r:r=1,2...n from a cryptographic key input, the program comprising program code means which when executed perform:
dividing a bit string of said cryptographic key into a plurality of bit groups k₀, k₁, ..., each bit group having a predetermined bit length; and
preparing (S2-S6) a plurality of intermediate data groups a, b, ... from the bit groups k₀, k₁, ... by a predetermined operation applying different constants in accordance with the value of an integer i for each bit group k₀, k₁, . . . , wherein each of said intermediate data groups a, b, ... is composed of a combination of a plurality of first intermediate data a[i], b[i]... each having three different values i=0, 1, or 2; and, in each stage:
selecting (S8) one of said three different values a[i], b[i]... of each of the first intermediate data depending on the number r of the current stage to determine second intermediate data a[Xᵣ], b[Yᵣ], ...; and
preparing (S9-S11) the extended key ExKeyᵣ having a bit length longer than the bit string of said cryptographic key by converting irreversibly the second intermediate data a[Xᵣ], b[Yᵣ], ....

## Patentansprüche

1. Vorrichtung (3) zum Vorbereiten von erweiterten Schlüsseln, bei der erweiterte Schlüssel ExKeyᵣ in einem Kryptosystem mit Gemeinschaftsschlüssel in sukzessiven Stufen r: r = 1 ... n von einem eingegebenen kryptographischen Schlüssel vorbereitet werden, mit:
einer Teilungseinheit (4), die dafür ausgelegt ist, um eine Bitkette des kryptographischen Schlüssels in eine Vielzahl von Bitgruppen k₀, k₁, ... zu teilen, wobei jede Bitgruppe eine vorbestimmte Bitlänge hat;
einer Zwischendatenvorbereitungseinheit (4), die dafür ausgelegt ist, um eine Vielzahl von Zwischendatengruppen a, b, ... von den Bitgruppen k₀, k₁, ... durch eine vorbestimmte Operation vorzubereiten, wobei verschiedene Konstanten gemäß dem Wert einer ganzen Zahl i für jede Bitgruppe k₀, k₁, ... angewendet werden, bei der jede der Zwischendatengruppen a, b, ... aus einer Kombination aus einer Vielzahl von ersten Zwischendaten a[i], b[i], ... gebildet ist, die jeweils drei verschiedene Werte i = 0, 1 oder 2 haben;
einer Selektionseinheit (5), die dafür ausgelegt ist, um in jeder Stufe einen der drei verschiedenen Werte a[i], b[i], ··· jeweils von den ersten Zwischendaten in Abhängigkeit von einer Nummer r der gegenwärtigen Stufe zu selektieren, um zweite Zwischendaten a[Xᵣ], b[Yᵣ], zu bestimmen; und
einer Vorbereitungseinheit von erweiterten Schlüsseln (5), die dafür ausgelegt ist, um in jeder Stufe den erweiterten Schlüssel ExKeyᵣ vorzubereiten, der eine Bitlänge hat, die länger als die Bitkette des kryptographischen Schlüssels ist, indem die zweiten Zwischendaten a[Xᵣ], b[Yᵣ], ... irreversibel konvertiert werden.

2. Vorrichtung zum Vorbereiten von erweiterten Schlüsseln nach Anspruch 1, bei der die Zwischendatenvorbereitungseinheit (4) mit einer Einheit zur nichtlinearen Operation versehen ist, die dafür ausgelegt ist, um eine nichtlineare Operation bezüglich jeder Bitgruppe k₀, k₁, ... zu bewirken, um die Zwischendatengruppen a, b , ... vorzubereiten.

3. Vorrichtung zum Vorbereiten von erweiterten Schlüsseln nach Anspruch 2, bei der die Teilungseinheit (4) dafür ausgelegt ist, um die Bitkette des kryptographischen Schlüssels in acht Bitgruppen k₀, k₁, ... k₇ zu teilen, die vorbestimmte Bitlänge 32 Bits beträgt und die Einheit zur nichtlinearen Operation dafür ausgelegt ist, um jede Bitgruppe in 6, 5, 5, 5, 5 und 6 Bits m₀, m₁, m₂, m₃, m₄, m₅ zu trennen, die vier 5-Bit-Gruppen in vier erste Werte S₁ - S₄ unter Verwendung einer ersten nichtlinearen Transformationsfunktion zu transformieren, die zwei 6-Bit-Gruppen in zwei zweite Werte S₀, S₅ unter Verwendung einer zweiten nichtlinearen Transformationsfunktion zu transformieren, die vier ersten Werte S₁ - S₄ mit den zwei zweiten Werten S₀, S₅ zu verknüpfen, um einen dritten Wert V zu erhalten, und die ersten Zwischendaten a[i], b[i], c[i], d[i] durch eine Logikoperation unter Verwendung jedes Bits des dritten Wertes Vi und eines vierten Wertes MDS(i) vorzubereiten, der von der Position i des Bits abhängt und aus einer vorbestimmten Tabelle erhalten wird.

4. Vorrichtung zum Vorbereiten von erweiterten Schlüsseln nach Anspruch 2 oder 3, bei der die Zwischendatenvorbereitungseinheit (4) versehen ist mit:
einer Additionseinheit, die dafür ausgelegt ist, um eine erste Konstante zu einer geradzahligen Bitgruppe k₀', k₂', ..., die der nichtlinearen Operation unterzogen worden ist, zu addieren, um ein erstes Resultat Ta (k₀, i), Tb (k₂, i), ... zu erhalten;
einer Multiplikationseinheit, die dafür ausgelegt ist, um eine ungeradzahlige Bitgruppe k₁' , k₃' , ..., die der nichtlinearen Operation unterzogen worden ist, mit einer zweiten Konstante zu multiplizieren, um ein zweites Resultat Ua (k₁,i), Ub (k₃, i), ... zu erhalten, bei der die ungerade Zahl die gerade Zahl plus eins ist; und
einer Exklusiv-ODER-Operationseinheit, die dafür ausgelegt ist, um eine Exklusiv-ODER-Operation des ersten Resultats und des zweiten Resultats zu bewirken:

5. Vorrichtung zum Vorbereiten von erweiterten Schlüsseln nach Anspruch 4, bei der die Zwischendatenvorbereitungseinheit (4) ferner mit einer Vorbereitungseinheit zum nichtlinearen Operieren mit einem Resultat der Exklusiv-ODER-Operation versehen ist, um die Zwischendatengruppen zu erhalten.

6. Vorrichtung zum Vorbereiten von erweiterten Schlüsseln nach irgendeinem vorhergehenden Anspruch, bei der die Vorbereitungseinheit von erweiterten Schlüsseln (5) versehen ist mit:
einer Neuanordnungseinheit, die dafür ausgelegt ist, um die zweiten Zwischendaten a[Xᵣ], b[Yᵣ], ... neu anzuordnen, um neu angeordnete Zwischendaten zu erhalten; und
einer Einheit zur irreversiblen Konvertierung, die dafür ausgelegt ist, um die neu angeordneten Daten irreversibel zu konvertieren.

7. Vorrichtung zum Vorbereiten von erweiterten Schlüsseln nach Anspruch 6, bei der die zweiten Zwischendaten a[Xᵣ], b[Yᵣ], c[Zᵣ], d[Wᵣ] vier Items enthalten, die durch vier Elemente X, Y, Z bzw. W dargestellt werden, die Neuanordnungseinheit die vier Items neu anordnet und die Einheit zur irreversiblen Konvertierung:
dafür ausgelegt ist, um erste Daten vorzubereiten, durch das Addieren des Elementes Y zu Daten, die erhalten werden, indem das Element X um 1 Bit zyklisch nach links verschoben wird;
dafür ausgelegt ist, um zweite Daten vorzubereiten, die bestimmt werden, indem die Daten um 1 weiteres Bit zyklisch nach links verschoben werden, welche Daten durch Subtrahieren des Elementes W von Daten erhalten worden sind, die durch zyklisches Verschieben des Elementes Z um 1 Bit nach links erhalten wurden; und
dafür ausgelegt ist, um eine Exklusiv-ODER-Operation an den ersten Daten und den zweiten Daten auszuführen.

8. Vorrichtung zum Vorbereiten von erweiterten Schlüsseln nach irgendeinem vorhergehenden Anspruch, bei der die Teilungseinheit dafür ausgelegt ist, um einen kryptographischen Schlüssel von 128 Bits, 192 Bits oder 256 Bits in acht Gruppen k₀, k₁, ..., k₇ von 32 Bits zu teilen.

9. Verfahren zum Vorbereiten von erweiterten Schlüsseln, bei dem erweiterte Schlüssel ExKeyᵣ in einem Kryptosystem mit Gemeinschaftsschlüssel in sukzessiven Stufen r: r = 1, 2, ... n von einem kryptographischen Schlüssel vorbereitet werden, mit den Schritten:
Teilen einer Bitkette des kryptographischen Schlüssels in eine Vielzahl von Bitgruppen k₀, k₁, ... k₇, wobei jede Bitgruppe eine vorbestimmte Bitlänge hat; und
Vorbereiten (S2 - S6) einer Vielzahl von Zwischendatengruppen a, b, ... von den Bitgruppen k₀, k₁, ... durch eine vorbestimmte Operation, wobei verschiedene Konstanten gemäß dem Wert einer ganzen Zahl i für jede Bitgruppe k₀, k₁, ... angewendet werden, bei dem jede der Zwischendatengruppen a, b, ... aus einer Kombination aus einer Vielzahl von ersten Zwischendaten a[i], b[i], ... gebildet ist, die jeweils drei verschiedene Werte i = 0, 1 oder 2 haben; und in jeder Stufe:
Selektieren (S8) eines der drei verschiedenen Werte a[i], b[i], ... jeweils von den ersten Zwischendaten in Abhängigkeit von einer Nummer r der gegenwärtigen Stufe, um zweite Zwischendaten a[Xᵣ], b[Yᵣ], ... zu bestimmen; und
Vorbereiten (S9 - S11) des erweiterten Schlüssels ExKeyᵣ, der eine Bitlänge hat, die länger als die Bitkette des kryptographischen Schlüssels ist, indem die zweiten Zwischendaten a[Xᵣ] , b[Yᵣ], ... irreversibel konvertiert werden.

10. Verfahren zum Vorbereiten von erweiterten Schlüsseln nach Anspruch 9, bei dem der Vorbereitungsschritt (S2 - S6) einen Schritt zum nichtlinearen Operieren enthält, zum Bewirken einer nichtlinearen Operation bezüglich jeder Bitgruppe k₀, k₁, ..., um die Zwischendatengruppen a, b, ... vorzubereiten.

11. Verfahren zum Vorbereiten von erweiterten Schlüsseln nach Anspruch 10, bei dem der Teilungsschritt die Bitkette des kryptographischen Schlüssels in acht Bitgruppen k₀, k₁, ... k₇ teilt, die vorbestimmte Bitlänge 32 Bits beträgt und der Schritt zum nichtlinearen Operieren enthält:
Trennen jeder Bitgruppe in 6, 5, 5, 5, 5 und 6 Bits m₀, m₁, m₂, m₃, m₄, m₅;
Transformieren der vier 5-Bit-Gruppen in vier erste Werte S₁ - S₄ unter Verwendung einer ersten nichtlinearen Transformationsfunktion;
Transformieren der zwei 6-Bit-Gruppen in zwei zweite Werte S0, S5 unter Verwendung einer zweiten nichtlinearen Transformationsfunktion;
Verknüpfen der vier ersten Werte S₁ - S₄ mit den zwei zweiten Werten S₀, S₅, um einen dritten Wert V zu erhalten; und
Vorbereiten der ersten Zwischendaten a[i], b[i], c[i] oder d[i] durch eine Logikoperation unter Verwendung jedes Bits des dritten Wertes Vi und eines vierten Wertes MDS(i), der von der Position i des Bits abhängt und aus einer vorbestimmten Tabelle erhalten wird.

12. Verfahren zum Vorbereiten von erweiterten Schlüsseln nach Anspruch 10 oder 11, bei dem der Zwischendatenvorbereitungsschritt (S2 - S6) enthält:
einen Additionsschritt (S3) zum Addieren einer ersten Konstante zu einer geradzahligen Bitgruppe k₀', k₂', ..., die der nichtlinearen Operation unterzogen worden ist, um ein erstes Resultat Ta (k₀, i), Tb (k₂, i), ... zu erhalten;
einen Multiplikationsschritt (S4) zum Multiplizieren einer ungeradzahligen Bitgruppe k₁' , k₃', ..., die der nichtlinearen Operation unterzogen worden ist, mit einer zweiten Konstante i+1, um ein zweites Resultat Ua (k₁, i), Ub (k₃, i), ... zu erhalten, bei dem die ungerade Zahl die gerade Zahl plus eins ist; und
einen Exklusiv-ODER-Operationsschritt (S3) zum Bewirken einer Exklusiv-ODER-Operation des ersten Resultats und des zweiten Resultats.

13. Verfahren zum Vorbereiten von erweiterten Schlüsseln nach Anspruch 12, bei dem der Zwischendatenvorbereitungsschritt ferner einen Schritt zum Vorbereiten der Zwischendatengruppe durch nichtlineares Operieren mit einem Resultat des Exklusiv-ODER-Operationsschrittes (S5) umfaßt.

14. Verfahren zum Vorbereiten von erweiterten Schlüsseln nach irgendeinem der Ansprüche 9 - 13, bei dem der Schritt zum Vorbereiten von erweiterten Schlüsseln (S9 - S11) enthält:
einen Neuanordnungsschritt (S9) zum Neuanordnen der zweiten Zwischendaten a[Xᵣ], b[Yᵣ], ..., um neu angeordnete Zwischendaten zu erhalten; und
einen Schritt zum irreversiblen Konvertieren (S10), zum irreversiblen Konvertieren der neu angeordneten Daten.

15. Verfahren zum Vorbereiten von erweiterten Schlüsseln nach Anspruch 14, bei dem die zweiten Zwischendaten a[Xᵣ], b[Yᵣ], c[Zᵣ], d[Wᵣ] vier Items enthalten, die durch vier Elemente X, Y, Z bzw. W dargestellt werden, der Neuanordnungsschritt (S9) das Neuanordnen der vier Items enthält und der Schritt zum irreversiblen Konvertieren (S10) enthält:
Vorbereiten von ersten Daten durch das Addieren des Elementes Y zu Daten, die erhalten werden, indem das Element X um 1 Bit zyklisch nach links verschoben wird;
Vorbereiten von zweiten Daten, die bestimmt werden, indem die Daten um 1 weiteres Bit zyklisch nach links verschoben werden, welche Daten durch Subtrahieren des Elementes W von Daten erhalten worden sind, die durch zyklisches Verschieben des Elementes Z um 1 Bit nach links erhalten wurden; und
Ausführen einer Exklusiv-ODER-Operation an den ersten Daten und den zweiten Daten.

16. Verfahren zum Vorbereiten von erweiterten Schlüsseln nach irgendeinem der Ansprüche 9 - 15, bei dem der Teilungsschritt das Teilen eines kryptographischen Schlüssels von 128 Bits, 192 Bits oder 256 Bits in acht Bitgruppen k₀, k₁, ..., k₇ von 32 Bits enthält.

17. Computerlesbares Aufzeichnungsmedium, in dem ein Programm zum Vorbereiten von erweiterten Schlüsseln aufgezeichnet ist, worin erweiterte Schlüssel ExKeyᵣ in einem Kryptosystem mit Gemeinschaftsschlüssel in sukzessiven Stufen r: r = 1, 2, ... n von einem eingegebenen kryptographischen Schlüssel vorbereitet werden, welches Programm ein Programmcodemittel umfaßt, das dann, wenn es ausgeführt wird, folgendes vollzieht:
Teilen einer Bitkette des kryptographischen Schlüssels in eine Vielzahl von Bitgruppen k₀, K₁, ..., wobei jede Bitgruppe eine vorbestimmte Bitlänge hat; und
Vorbereiten (S2 - S6) einer Vielzahl von Zwischendatengruppen a, b, ... von den Bitgruppen k₀, k₁, ... durch eine vorbestimmte Operation, wobei verschiedene Konstanten gemäß dem Wert einer ganzen Zahl i für jede Bitgruppe k₀, k₁, ... angewendet werden, bei dem jede der Zwischendatengruppen a, b, ... aus einer Kombination aus einer Vielzahl von ersten Zwischendaten a[i], b[i], ... gebildet ist, die jeweils drei verschiedene Werte i = 0, 1 oder 2 haben; und in jeder Stufe:
Selektieren (S8) eines a[i], b[i], ... mit den drei verschiedenen Werten jeweils von den ersten Zwischendaten in Abhängigkeit von der Nummer r der gegenwärtigen Stufe, um zweite Zwischendaten a[Xᵣ], b[Yᵣ], ... zu bestimmen; und
Vorbereiten (S9 - S11) des erweiterten Schlüssels ExKeyᵣ, der eine Bitlänge hat, die länger als die Bitkette des kryptographischen Schlüssels ist, indem die zweiten Zwischendaten a[Xᵣ], b[Yᵣ], ... irreversibel konvertiert werden.

18. Programm zum Vorbereiten von erweiterten Schlüsseln, bei dem erweiterte Schlüssel ExKeyᵣ in einem Kryptosystem mit Gemeinschaftsschlüssel in sukzessiven Stufen r: r = 1, 2, ... n von einem eingegebenen kryptographischen Schlüssel vorbereitet werden, welches Programm ein Programmcodemittel umfaßt, das dann, wenn es ausgeführt wird, folgendes vollzieht:
Teilen einer Bitkette des kryptographischen Schlüssels in eine Vielzahl von Bitgruppen k₀, k₁, ..., wobei jede Bitgruppe eine vorbestimmte Bitlänge hat; und
Vorbereiten (S2 - S6) einer Vielzahl von Zwischendatengruppen a, b, ... von den Bitgruppen k₀, k₁, ... durch eine vorbestimmte Operation, wobei verschiedene Konstanten gemäß dem Wert einer ganzen Zahl i für jede Bitgruppe k₀, k₁, ... angewendet werden, bei dem jede der Zwischendatengruppen a, b, ... aus einer Kombination aus einer Vielzahl von ersten Zwischendaten a[i], b[i], ... gebildet ist, die jeweils drei verschiedene Werte i = 0, 1 oder 2 haben; und in jeder Stufe:
Selektieren (S8) eines der drei verschiedenen Werte a[i], b[i], ... jeweils von den ersten Zwischendaten in Abhängigkeit von einer Nummer r der gegenwärtigen Stufe, um zweite Zwischendaten a[Xᵣ], b[Yᵣ], ... zu bestimmen; und
Vorbereiten (S9 - S11) des erweiterten Schlüssels ExKeyᵣ, der eine Bitlänge hat, die länger als die Bitkette des kryptographischen Schlüssels ist, indem die zweiten Zwischendaten a[Xᵣ], b[Yᵣ], ... irreversibel konvertiert werden.

## Revendications

1. Dispositif de préparation de clés étendues (3) dans lequel des clés étendues ExKeyᵣ sont préparées dans un cryptosystème à clé commune en stades successifs r:r = 1 ... n à partir d'une entrée de clé cryptographique, comprenant :
une unité de division (4) conçue pour diviser une chaîne de bits de ladite clé cryptographique en une pluralité de groupes de bits k₀, k₁, ..., chaque groupe de bits présentant une longueur en bits prédéterminée,
une unité de préparation de données intermédiaires (4) conçue pour préparer une pluralité de groupes de données intermédiaires a, b, ... à partir des groupes de bits k₀, k₁, ... par une opération prédéterminée appliquant différentes constantes conformément à la valeur d'un nombre entier i pour chaque groupe de bits k₀, k₁, ..., dans lequel chacun desdits groupes de données intermédiaires a, b, ... est composé d'une combinaison d'une pluralité de première données intermédiaires a[i], b[i], ... ayant chacune trois valeurs différentes i = 0, 1 ou 2,
une unité de sélection (5) conçue pour sélectionner dans chaque stade l'une desdites trois valeurs différentes a[i], b[i], ... de chacune des premières données intermédiaires suivant un numéro r du stade en cours afin de déterminer des secondes données intermédiaires a[Xᵣ], b[Yᵣ], ..., et
une unité de préparation de clé étendue (5) conçue pour préparer à chaque stade la clé étendue Exkeyᵣ présentant une longueur en bits plus longue que la chaîne de bits de ladite clé cryptographique en convertissant de façon irréversible les secondes données intermédiaires a[Xᵣ], b[Xᵣ], ...

2. Dispositif de préparation de clés étendues selon la revendication 1, dans lequel ladite unité de préparation de données intermédiaires (4) est munie d'une unité d'opération non linéaire conçue pour réaliser une opération non linéaire en ce qui concerne chaque groupe de bits k₀, k₁,... pour préparer les groupes de données intermédiaires a, b, ...

3. Dispositif de préparation de clés étendues selon la revendication 2, dans lequel ladite unité de division (4) est conçue pour diviser la chaîne de bits de ladite clé cryptographique en huit groupes des groupes de bits k₀, k₁, ... k₇, la longueur en bits prédéterminée est de 32 bits, et ladite unité d'opération non linéaire est conçue pour séparer chaque groupe de bits en 6, 5, 5, 5, 5, et 6 bits m₀, m₁, m₂, m₃, m₄, m₅, transformer les quatre ensembles de 5 bits en quatre premières valeurs S₁ à S₄ en utilisant une première fonction de transformation non linéaire, transformer les deux ensembles de 6 bits en deux secondes valeurs S₀, S₅ en utilisant une seconde fonction de transformation non linéaire, lier les quatre premières valeurs S₁ à S₄ aux deux secondes valeurs S₀ à S₅ pour obtenir une troisième valeur V, et préparer les premières données intermédiaires a[i], b[i], c[i], d[i] par une opération logique en utilisant chaque bit de la troisième valeur Vi et une quatrième valeur MDS(i) suivant la position i du bit obtenu à partir d'une table prédéterminée.

4. Dispositif de préparation de clés étendues selon la revendication 2 ou 3, dans lequel ladite unité de préparation de données intermédiaires (4) est munie de :
une unité d'addition conçue pour additionner une première constante à un groupe de bits à numéros pairs k₀', k₂'.... qui a été soumis à l'opération non linéaire afin d'obtenir un premier résultat Ta (k₀,i), Tb (k₂,i) ...,
une unité de multiplication conçue pour multiplier par une seconde constante un groupe de bits à numéros impairs k₁', k₃', ... qui a été soumis à l'opération non linéaire afin d'obtenir afin d'obtenir un second résultat Ua (k₁,i), Ub(k₃,i) ..., dans lequel le numéro impair est le numéro pair plus un, et
une unité d'opération OU EXCLUSIF conçue pour réaliser une opération OU EXCLUSIF du premier résultat et du second résultat.

5. Dispositif de préparation de clés étendues selon la revendication 4, dans lequel ladite unité de préparation de données intermédiaires (4) est en outre munie d'une unité de préparation destinée à agir de façon non linéaire sur un résultat de l'opération OU EXCLUSIF afin d'obtenir les groupes de données intermédiaires.

6. Dispositif de préparation de clés étendues selon la revendication précédente, dans lequel ladite unité de préparation de clé étendue (5) est munie de :
une unité de réagencement, conçue pour réagencer les secondes données intermédiaires a[Xᵣ], b[Yᵣ], ... pour obtenir des données intermédiaires réagencées, et
une unité de conversion irréversible conçue pour convertir de façon irréversible les données intermédiaires réagencées.

7. Dispositif de préparation de clés étendues selon la revendication 6, dans lequel les secondes données intermédiaires a[Xᵣ], b[Yᵣ], c[Zᵣ], d[Wᵣ] comprennent quatre membres représentés par quatre éléments X, Y, Z et W, respectivement, ladite unité de réagencement réagence les quatre membres, et ladite unité de conversion irréversible :
est conçue pour préparer des premières données en additionnant l'élément Y aux données obtenues en décalant de façon cyclique l'élément X vers la gauche de 1 bit,
est conçue pour préparer des secondes données déterminées en décalant de façon cyclique les données vers la gauche d'un autre bit, lesquelles données ont été obtenues en soustrayant l'élément W des données obtenues en décalant de façon cyclique ledit élément Z vers la gauche de 1 bit, et
est conçue pour exécuter une opération OU EXCLUSIF sur lesdites premières données et lesdites secondes données.

8. Dispositif de préparation de clés étendues selon l'une quelconque des revendications précédentes, dans lequel ladite unité de division est conçue pour diviser une clé cryptographique de 128 bits, 192 bits ou 256 bits en huit groupes k₀, k₁, ... k₇ de 32 bits.

9. Procédé de préparation de clés étendues dans lequel des clés étendues ExKeyᵣ sont préparées dans un cryptosystème à clé commune dans des stades successifs r:r = 1, 2, ... n à partir d'une clé cryptographique, comprenant les étapes consistant à :
diviser une chaîne de bits de ladite clé cryptographique en une pluralité de groupes de bits k₀, k₁, ... k₇, chaque groupe de bits présentant une longueur en bits prédéterminée, et
préparer (S2 à S6) une pluralité de groupes de données intermédiaires a, b, ... à partir des groupes de bits k₀, k₁, ... par une opération prédéterminée appliquant différentes constantes conformément à la valeur d'un nombre entier i pour chaque groupe de bits k₀, k₁, ..., dans lequel chacun desdits groupes de données intermédiaires a, b, ... est composé d'une combinaison d'une pluralité de premières données intermédiaires a[i], b[i], ... ayant chacune trois valeurs différentes i = 0, 1 ou 2,
et, dans chaque stade :
sélectionner (S8) l'une desdites trois valeurs différentes a[i], b[i], ... de chacune des premières données intermédiaires suivant un numéro r du stade en cours afin de déterminer des secondes données intermédiaires a[Xᵣ], b[Yᵣ] ..., et
préparer (S9 à S11) la clé étendue ExKeyᵣ présentant une longueur en bits plus longue que la chaîne de bits de ladite clé cryptographique en convertissant de façon irréversible les secondes données intermédiaires a[Xᵣ], b[Yᵣ], ...

10. Procédé de préparation de clés étendues selon la revendication 9, dans lequel ladite étape de préparation (S2 à S6) comprend une étape d'opération non linéaire destinée à réaliser une opération non linéaire en ce qui concerne chaque groupe de bits k₀, k₁, ... pour préparer les groupes de données intermédiaires a, b, ...

11. Procédé de préparation de clés étendues selon la revendication 10, dans lequel ladite étape de division divise la chaîne de bits de ladite clé cryptographique en huit des groupes de bits k₀, k₁, ... k₇, la longueur en bits prédéterminée est de 32 bits et ladite étape d'opération non linéaire comprend :
la séparation de chaque groupe de bits en 6, 5, 5, 5, 5 et 6 bits m₀, m₁, m₂, m₃, m₄, m₅,
la transformation des quatre ensembles de 5 bits en quatre premières valeurs S₁ à S₄ en utilisant une première fonction de transformation non linéaire,
la transformation des deux ensembles de 6 bits en deux secondes valeurs S₀, S₅ en utilisant une seconde fonction de transformation non linéaire,
la liaison des quatre premières valeurs S₁ à S₄ aux deux secondes valeurs S₀, S₅ pour obtenir une troisième valeur V, et
la préparation des premières données intermédiaires a[i], b[i], c[i] ou d[i] par une opération logique en utilisant chaque bit de la troisième valeur Vi et une quatrième valeur MDS(i) suivant la position i du bit obtenu à partir d'une table prédéterminée.

12. Procédé de préparation de clés étendues selon la revendication 10 ou 11, dans lequel ladite étape de préparation de données intermédiaires S₂ à S₆ comprend :
une étape d'addition (S₃) destinée à additionner une première constante à un groupe de bits à numéros pairs k₀', k₂', ... qui a été soumis à l'opération non linéaire afin d'obtenir un premier résultat Ta(k₀,i), Tb(k₂,i), ...,
une étape de multiplication (S4) destinée à multiplier par une seconde constante i + 1 un groupe de bits à numéros impairs k₁', k₃', ... qui a été soumis à l'opération non linéaire afin d'obtenir un second résultat Ua(k₁,i), Ub(k₃,i), ..., dans lequel le nombre impair est le nombre pair plus un, et
une étape d'opération OU EXCLUSIF (S3) destinée à réaliser une opération OU EXCLUSIF du premier résultat et du second résultat.

13. Procédé de préparation de clés étendues selon la revendication 12, dans lequel ladite étape de préparation de données intermédiaires comprend en outre une étape destinée à préparer le groupe de données intermédiaires en agissant de façon non linéaire sur un résultat de l'étape d'opération OU EXCLUSIF (S5).

14. Procédé de préparation de clés étendues selon l'une quelconque des revendications 9 à 13, dans lequel ladite étape de préparation de clé étendue (S9 à S11) comprend :
une étape de réagencement (S9) destinée à réagencer les secondes données intermédiaires a[Xᵣ], b[Yᵣ], ... pour obtenir des données intermédiaires réagencées, et
une étape de conversion irréversible (S10) destinée à convertir de façon irréversible les données intermédiaires réagencées.

15. Procédé de préparation de clés étendues selon la revendication 14, dans lequel les secondes données intermédiaires a[Xᵣ], b[Yᵣ], c[Zᵣ], d[Wᵣ] comprennent quatre membres représentés par quatre éléments X, Y, Z et W, respectivement, ladite étape de réagencement (S9) comprend le réagencement des quatre membres, et ladite étape de conversion irréversible (S10) comprend:
la préparation de premières données en additionnant l'élément Y aux données obtenues en décalant de façon cyclique l'élément X vers la gauche de 1 bit,
la préparation de secondes données déterminées en décalant de façon cyclique les données vers la gauche de 1 autre bit, lesquelles données ont été obtenues en soustrayant l'élément W des données obtenues en décalant de façon cyclique ledit élément Z vers la gauche de 1 bit, et
l'exécution d'une opération OU EXCLUSIF sur lesdites premières données et lesdites secondes données.

16. Procédé de préparation de clés étendues selon l'une quelconque des revendications 9 à 15, dans lequel ladite étape de division comprend la division d'une clé cryptographique de 128 bits, 192 bits, ou 256 bits en huit groupes de bits k₀, k₁,... k₇ de 32 bits.

17. Support d'enregistrement lisible par un ordinateur dans lequel un programme de préparation de clés étendues, dans lequel des clés étendues ExKeyᵣ sont préparées dans un cryptosystème à clé commune dans des stades successifs r:r =1, 2 ... n à partir d'une entrée de clé cryptographique, est enregistré, le programme comprenant un moyen de code de programme qui, lorsqu'il est exécuté, exécute :
la division d'une chaîne de bits de ladite clé cryptographique en une pluralité de groupes de bits k₀, k₁, ..., chaque groupe de bits ayant une longueur en bits prédéterminée, et
la préparation (S2 à S6) d'une pluralité de groupes de données intermédiaires a, b, ... à partir des groupes de bits k₀, k₁, ...par une opération prédéterminée appliquant différentes constantes conformément à la valeur d'un nombre entier i pour chaque groupe de bits k₀, k₁, ... dans lequel chacun desdits groupes de données intermédiaires a, b, ... est composé d'une combinaison d'une pluralité de premières données intermédiaires a[i], b[i], ... chacune ayant trois valeurs différentes i = 0, 1 ou 2, et dans chaque stade :
la sélection (S8) d'une valeur a[i], b[i], ... desdites trois valeurs différentes de chacune des premières données intermédiaires suivant le numéro r du stade en cours afin de déterminer des secondes données intermédiaires a[Xᵣ], b[Yᵣ], ..., et
la préparation (S9 à S11) de la clé étendue ExKeyᵣ présentant une longueur en bits plus longue que la chaîne de bits de ladite clé cryptographique en convertissant de façon irréversible les secondes données intermédiaires a[Xᵣ], b[Yᵣ], ...

18. Programme de préparation de clés étendues, dans lequel des clés étendues ExKeyᵣ sont préparées dans un cryptosystème à clé commune dans des stades successifs r:r = 1, 2 ... n à partir d'une entrée de clé cryptographique, le programme comprenant un moyen de code de programme qui, lorsqu'il est exécuté, exécute :
la division d'une chaîne de bits de ladite clé cryptographique en une pluralité de groupes de bits k₀, k₁, ..., chaque groupe de bits ayant une longueur en bits prédéterminée, et
la préparation (S2 à S6) d'une pluralité de groupes de données intermédiaires a, b, ... à partir des groupes de bits k₀, k₁, ...par une opération prédéterminée appliquant différentes constantes conformément à la valeur d'un nombre entier i pour chaque groupe de bits k₀, k₁, ..., dans lequel chacun desdits groupes de données intermédiaires a, b, ... est composé d'une combinaison d'une pluralité de premières données intermédiaires a[i], b[i], ... chacune ayant trois valeurs différentes i = 0, 1 ou 2, et dans chaque stade :
la sélection (S8) de l'une desdites trois valeurs différentes a[i], b[i], ... de chacune des premières données intermédiaires suivant le numéro r du stade en cours afin de déterminer des secondes données intermédiaires a[Xᵣ], b[Yᵣ], ..., et
la préparation (S9 à S11) de la clé étendue ExKeyᵣ ayant une longueur en bits plus longue que la chaîne de bits de ladite clé cryptographique en convertissant de façon irréversible les secondes données intermédiaires a[Xᵣ], b[Yᵣ], ...
